(19)

Europäisches
Patentamt

European
Patent Office

Office européen
des brevets

(11) **EP 4 134 834 A1**

(12) **EUROPEAN PATENT APPLICATION**

(43) Date of publication:
**15.02.2023 Bulletin 2023/07**

(21) Application number: **22216989.8**

(22) Date of filing: **28.12.2022**

(51) International Patent Classification (IPC):
**G06F 16/24** (2019.01)      **G06F 17/18** (1995.01)

(52) Cooperative Patent Classification (CPC):
**G06F 16/24; G06F 17/18; G06N 3/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.02.2022   CN 202210166903**

(71) Applicant: **Beijing Baidu Netcom Science Technology Co., Ltd.**
**Beijing 100085 (CN)**

(72) Inventors:
• **LIU, Haocheng**
  **Beijing, 100085 (CN)**
• **XU, Jingyu**
  **Beijing, 100085 (CN)**
• **CHEN, Cai**
  **Beijing, 100085 (CN)**
• **LI, Shuo**
  **Beijing, 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD AND APPARATUS OF PROCESSING FEATURE INFORMATION, ELECTRONIC DEVICE, AND STORAGE MEDIUM**

(57)    The present disclosure provides a method of processing a feature information, which relates to a field of a data processing technology, in particular to fields of artificial intelligence and big data. A specific implementation solution includes: determining at least one candidate division point in a value range to be divided of the feature information, and determining an information value corresponding to each candidate division point in the at least one candidate division point; determining a target division point from the at least one candidate division point based on the information value; dividing the value range to be divided based on the target division point, so as to obtain two sub-ranges of the value range to be divided; determining a sub-range meeting a termination condition in the two sub-ranges as a target interval, determining a sub-range not meeting the termination condition in the two sub-ranges as a new value range to be divided, and returning to perform the step of determining at least one candidate division point in a value range to be divided until both sub-ranges meet the termination condition, so as to obtain a plurality of target intervals.

S110

At least one candidate division point is determined in a value range to be divided of the feature information, and an information value corresponding to each candidate division point in the at least one candidate division point is determined

S120

A target division point is determined from the at least one candidate division point based on the information value

S130

The value range to be divided is divided based on the target division point, so as to obtain two sub-ranges of the value range to be divided

S140

A sub-range meeting a termination condition in the two sub-ranges is determined as a target interval, a sub-range not meeting the termination condition in the two sub-ranges is determined as a new value range to be divided, and the process returns to the step of determining at least one candidate division point in a value range to be divided until both sub-ranges meet the termination condition, so as to obtain a plurality of target intervals

FIG. 1

Processed by Luminess, 75001 PARIS (FR)

**Description**

TECHNICAL FIELD

The present disclosure relates to a field of a data processing technology, in particular to fields of artificial intelligence and big data, and specifically to a method and an apparatus of processing a feature information, an electronic device, and a storage medium.

BACKGROUND

In the field of the data processing technology, a feature information of data to be processed includes a continuous variable and a discrete variable. In some scenarios, it is needed to perform a variable binning (that is, a discretization processing) on the continuous variable such as an age, an amount, and so on, so as to perform data mining and analysis using a discretization code corresponding to the continuous variable. Common binning methods include equal-frequency binning, equidistant binning, distribution binning, and so on.

SUMMARY

The present disclosure provides a method and an apparatus of processing a feature information, an electronic device, and a storage medium.

According to an aspect of the present disclosure, a method of processing a feature information is provided, including: determining at least one candidate division point in a value range to be divided of the feature information, and determining an information value corresponding to each candidate division point in the at least one candidate division point; determining a target division point from the at least one candidate division point based on the information value; dividing the value range to be divided based on the target division point, so as to obtain two sub-ranges of the value range to be divided; determining a sub-range meeting a termination condition in the two sub-ranges as a target interval, determining a sub-range not meeting the termination condition in the two sub-ranges as a new value range to be divided, and returning to perform the step of determining at least one candidate division point in a value range to be divided until both sub-ranges meet the termination condition, so as to obtain a plurality of target intervals; wherein the plurality of target intervals are obtained to determine a discretization code of a feature information of data to be processed.

According to another aspect of the present disclosure, an apparatus of processing a feature information is provided, including: a value determination module configured to determine at least one candidate division point in a value range to be divided of the feature information, and determine an information value corresponding to each candidate division point in the at least one candidate division point; a division point determination module configured to determine a target division point from the at least one candidate division point based on the information value; a division module configured to divide the value range to be divided based on the target division point, so as to obtain two sub-ranges of the value range to be divided; and a sub-range iteration module configured to determine a sub-range meeting a termination condition in the two sub-ranges as a target interval, determine a sub-range not meeting the termination condition in the two sub-ranges as a new value range to be divided, and return to perform the step of determining at least one candidate division point in a value range to be divided until both sub-ranges meet the termination condition, so as to obtain a plurality of target intervals; wherein the plurality of target intervals are obtained to determine a discretization code of a feature information of data to be processed.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method in any embodiment of the present disclosure.

According to another aspect of the present disclosure, a non-transitory computer-readable storage medium having computer instructions therein is provided, and the computer instructions are configured to cause a computer to implement the method in any embodiment of the present disclosure.

According to another aspect of the present disclosure, a computer program product containing a computer program is provided, and the computer program, when executed by a processor, causes the processor to implement the method in any embodiment of the present disclosure.

According to the technology of the present disclosure, it is possible to determine a plurality of discretization intervals having a largest information value within the value range of the feature information, so that an optimal discretization may be achieved, and an efficiency of discretization processing may be improved.

It should be understood that content described in this section is not intended to identify key or important features in embodiments of the present disclosure, nor is it intended to limit the scope of the present disclosure. Other features of the present disclosure will be easily understood through the following description.

BRIEF DESCRIPTION OF THE DRAWINGS

The accompanying drawings are used for better understanding of the solution and do not constitute a limitation to the present disclosure, in which:

FIG. 1 shows a first schematic flowchart of a method of processing a feature information according to embodiments of the present disclosure;

FIG. 2 shows a second schematic flowchart of a method of processing a feature information according to embodiments of the present disclosure;

FIG. 3 shows a schematic diagram of a tree structure for an age division according to embodiments of the present disclosure;

FIG. 4 shows a schematic diagram of a whole process of processing a feature information according to embodiments of the present disclosure;

FIG. 5 shows a first schematic diagram of an apparatus of processing a feature information according to embodiments of the present disclosure;

FIG. 6 shows a second schematic diagram of an apparatus of processing a feature information according to embodiments of the present disclosure;

FIG. 7 shows a third schematic diagram of an apparatus of processing a feature information according to embodiments of the present disclosure;

FIG. 8 shows a block diagram of an electronic device for implementing a method of processing a feature information of embodiments of the present disclosure.

DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following descriptions.

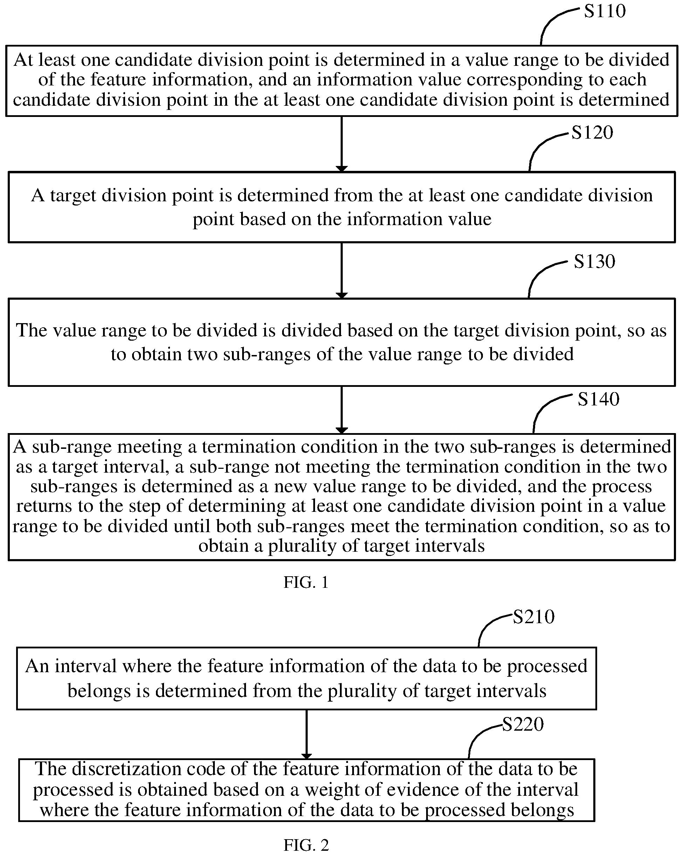

FIG. 1 shows a schematic diagram of a method of processing a feature information provided by embodiments of the present disclosure. As shown in FIG. 1, the method may include the following steps.

In S110, at least one candidate division point is determined in a value range to be divided of the feature information, and an information value (IV) corresponding to each candidate division point in the at least one candidate division point is determined.

In S120, a target division point is determined from the at least one candidate division point based on the information value.

In S130, the value range to be divided is divided based on the target division point, so as to obtain two sub-ranges of the value range to be divided.

In S140, a sub-range meeting a termination condition in the two sub-ranges is determined as a target interval, a sub-range not meeting the termination condition in the two sub-ranges is determined as a new value range to be divided, and the process returns to the step of determining at least one candidate division point in a value range to be divided until both sub-ranges meet the termination condition, so as to obtain a plurality of target intervals. The plurality of target intervals are obtained to determine a discretization code of a feature information of data to be processed.

In embodiments of the present disclosure, the feature information may refer to a variable indicating a feature of object data (such as user data or product data). Exemplarily, in a scenario where a prediction is performed on some objects by using a prediction model (such as a logistic regression model or a neural network model), the feature information may be a variable representing the object that is input into the prediction model. For example, for a user, the feature information may be an age, a height, and so on.

In embodiments of the present disclosure, the information value (IV) is a numerical value representing a prediction ability, which may also be called an amount of information. In practical applications, the information value may be used to measure the prediction ability of each variable group (such as the above-mentioned sub-range and target interval) obtained by variable binning.

Exemplarily, for a variable group i, the information value may be calculated based on a WOE (Weight of Evidence) of the group i. The WOE represents a difference between a ratio of positive samples to negative samples in the group i and a ratio of positive samples to negative samples in all samples. An overall information value of the variable may be obtained according to the information value of the variable in each group. For example, the overall information value of the variable may be obtained by accumulating the information value of each group. Therefore, the information value may also be used to measure a prediction ability of the variable, for example, to select a variable when modeling.

According to the above-mentioned step S110, in embodiments of the present disclosure, it is needed to calculate the information value of the candidate division points in the value range to be divided. Exemplarily, the information value of a candidate division point may be a sum of the information values of sub-ranges corresponding to the candidate division point. The sub-range corresponding to the candidate division point is a sub-range obtained by dividing the value range to be divided based on the candidate division point.

According to the above-mentioned method, a division point, for example, a division point with a largest information value, is firstly selected based on the information value in the value range to be divided, and then the value range to be divided is divided into two sub-ranges based on the division point. If the sub-range meets the termination condition, the sub-range may be determined as a target interval. If the sub-range does not meet the termination condition, the sub-range may be used as a new value range to be divided, in which a division point is further selected based on information value to divide and obtain two sub-ranges. In this way, after iterative operations, a plurality of target intervals may be obtained when the obtained sub-ranges all meet the termination condition, and these target intervals are discretization intervals of the feature information, which may be used to determine a discretization code of the feature information of the data to be processed.

For example, for the feature information of age, assuming that the initial value range to be divided is [0, 99], a target division point may be determined firstly from a plurality of candidate division points 20, 40, 60 and 80 according to the information value corresponding to each division point. Assuming that the target division point is 60, the value range to be divided may be divided into two sub-ranges [0, 59] and [60, 99]. If the two sub-ranges do not meet the termination conditions, [0, 59] and [60, 99] are both used as the value ranges to be divided, on which a next division is performed respectively. For example, [0, 59] may be divided into [0, 31] and [32, 59], and [60, 99] may be divided into [60, 71] and [72, 99]. If only [0, 31] does not meet the termination condition, [0, 31] is further divided into two sub-ranges such as [0, 18] and [19, 31]. If both [0, 18] and [19, 31] meet the termination condition, a plurality of target intervals may be obtained, including [0, 18], [19, 31], [32, 59], [60, 71] and [72, 99]. In this way, values of the age, which is a continuous feature, may be mapped to each target interval, and a discretization code of a specific age may be obtained based on the discretization code corresponding to each target interval. For example, the discretization codes corresponding to the above-mentioned five target intervals are 0, 1, 2, 3, and 4 respectively, then the discretization code for the age of 17 is 0, and the discretization code for the age of 30 is 1.

In practical applications, a plurality of candidate division points may be determined equidistantly or non-equidistantly in the value range to be divided, which may be set according to actual requirements and is not limited in embodiments of the present disclosure.

According to the above-mentioned method, since the division point of the value range to be divided is selected based on the information value, it is possible to select a division point with an optimal information value in each division. In addition, an iterative division method is adopted, which is conducive to a continuous improvement of the information value compared with selecting a plurality of division points at one time. In this way, in a process of determining the discretization interval of the feature information, the information value is maximized, that is, an optimal discretization is achieved. Moreover, compared with performing a complex analysis on the feature information based on a manual experience, it is possible to greatly improve an efficiency of the discretization processing and reduce labor costs.

Optionally, the method in embodiments of the present disclosure may further include a step of acquiring the discretization code of the data to be processed. Specifically, as shown in FIG. 2, the above method further includes the following steps.

In S210, an interval where the feature information of the data to be processed belongs is determined from the plurality of target intervals.

In S220, the discretization code of the feature information of the data to be processed is obtained based on a weight of evidence of the interval where the feature information of the data to be processed belongs.

The weight of evidence WOE is obtained based on a quantity of target data of which the feature information is within the interval among a plurality of sample data, and the target data may be data meeting a predetermined condition, that is, a positive sample.

Exemplarily, the WOE of the interval where the feature information is located may be used as the discretization code corresponding to the interval.

Since the WOE is obtained based on the quantity of target data of which the feature information is within the interval among the plurality of sample data, it may reflect the prediction ability of the interval. Therefore, with the WOE as the discretization code corresponding to the interval, the amount of information carried by the discretization code may be increased and a prediction accuracy may be improved when the discretization code is used for an information prediction.

Optionally, the method in embodiments of the present disclosure may further include a process of predicting the data to be processed. Specifically, the above-mentioned method may further include the following steps.

The discretization code of the feature information of the data to be processed is processed by using a preset logistic regression model, so as to obtain a prediction information corresponding to the data to be processed.

Exemplarily, the above-mentioned method may be used in an application field of an algorithm model. The algorithm model is, for example, a logistic regression model. For example, the above-mentioned data to be processed may be user data or product data. In a scenario of predicting a relevant information of a user or product based on the logistic regression model, it is possible to determine a plurality of target intervals or called discretization intervals of a feature information of the user or product based on the above-mentioned method, and then determine a discretization code of the user or product based on a value of the feature information of a specific user or product and a plurality of target intervals, so that the discretization code of the user or product may be used as an input information of the logistic regression model, and the relevant information (that is, the above-mentioned prediction information) of the user or product may be output by the logistic regression model. The feature information may be, for example, an age, an income amount, a consumption amount, etc. of the user, or a sales quantity, a repair quantity, etc. of the product. The predicted related information may be, for example, a consumption level of the user, a service life of the product, or the like.

According to the above-mentioned method, since the information value is maximized in the process of binning the feature information, the accuracy of the prediction information corresponding to the data to be processed may be improved by processing the discretization code of the feature information using the logistic regression model.

In an exemplary embodiment, an initial value range to be divided may be determined according to a type of the feature information. For example, the initial value range to be divided corresponding to the age may be [0, 99]; the value range to be divided for the sales quantity of a product may be [0, X], where X is an output of the product, and X is an integer greater than or equal to 1.

In another exemplary embodiment, the initial value range to be divided may be determined according to a value of the sample data. Specifically, the above-mentioned method may further include: obtaining an initial value range to be divided based on the feature information of each sample data among the plurality of sample data.

For example, if a minimum age of each user data among the plurality of user data used to construct the logistic regression model is 19, and a maximum value is 48, then the initial value range to be divided may be [19, 48].

According to this method, the initial value range to be divided may be determined according to a data characteristic in an actual application scene, so that an efficiency of dividing intervals may be improved, an amount of redundant calculation may be reduced, and the prediction efficiency may be improved.

Exemplarily, in the above-mentioned step S110, determining the information value corresponding to each candidate division point in the at least one candidate division point includes the following steps.

The value range to be divided is divided based on an $i^{th}$ candidate division point in the at least one candidate division point, so as to obtain two candidate sub-ranges corresponding to the $i^{th}$ candidate division point, where i is an integer greater than or equal to 1.

Information values respectively corresponding to the two candidate sub-ranges are obtained based on a feature information of each sample data in a plurality of sample data.

The information value corresponding to the $i^{th}$ candidate division point is obtained based on the information values respectively corresponding to the two candidate sub-ranges.

In other words, for each candidate division point, it may be assumed that the value range to be divided is divided into two sub-ranges based on the candidate division point, then the information values of the two sub-ranges are calculated respectively, and the information values of the two sub-ranges are synthesized to obtain the information value corresponding to the candidate division point.

If a sub-range is represented by i, the information value of the sub-range i may be determined with reference to the following equation.

$$IV_i = (py_i - pn_i)WOE_i = (py_i - pn_i)\ln\frac{py_i}{pn_i} = \left(\frac{\#y_i}{\#y_T} - \frac{\#n_i}{\#n_T}\right)\ln\frac{\#y_i/\#y_T}{\#n_i/\#n_T}$$

where $py_i$ represents a ratio of a quantity of target data in the sub-range to a quantity of target data in all sample data, $pn_i$ represents a ratio of a quantity of non-target data (that is, negative samples) in the sub-range to a quantity of all non-target data in all sample data, $\#y_i$ represents the quantity of target data in the sub-range, $\#n_i$ represents the quantity of non-target data in the sub-range, $\#y_T$ represents the quantity of target data in all sample data, and $\#n_T$ represents the quantity of non-target data in all sample data.

Exemplarily, the information values respectively corresponding to the two candidate sub-ranges may be summed to obtain the information value corresponding to the candidate division point.

According to the aforementioned exemplary embodiment, the information value corresponding to each division point may be calculated accurately, so as to ensure the maximization of the information value in the process of feature binning.

Exemplarily, in embodiments of the present disclosure, the termination condition includes at least one selected from: the sub-range is an Nth-level sub-range with respect to the initial value range to be divided, where N is an integer greater than or equal to 2; a number of feature values contained in the sub-range is less than a predetermined number; or the information value obtained by dividing the sub-range is less than the information value of the sub-range.

It may be understood that an idea of generating a decision tree is adopted in the aforementioned iterative division method in embodiments of the present disclosure. A level of the sub-range obtained by iteration with respect to the initial value range to be divided is a depth of the sub-range in the tree.

Exemplarily, the number of feature values contained in the sub-range being less than the predetermined number may be that, for example, the sub-range contains one feature value and may not be further divided.

In practical applications, if any one of the above three conditions is met, it may be regarded that the termination condition is met.

According to the above exemplary embodiments, if the depth of the tree reaches N and/or the number of feature value contained in the sub-range is less than the predetermined number and/or the information value of the divided sub-range no longer increases, then the division may be terminated, so that an overly division of levels may be avoided, and the efficiency of feature binning may be improved.

A specific application example of embodiments of the present disclosure is given below.

In this application example, a plurality of sample data are shown as follows.

| Serial number of sample data | Y value | Age | Income | Consumption amount |
|---|---|---|---|---|
| 1 | 1 | 28 | 12000 | 3358 |
| 2 | 0 | 19 | 8500 | 2747 |
| 3 | 0 | 27 | 11500 | 4000 |
| 4 | 0 | 31 | 9600 | 1600 |
| 5 | 1 | 25 | 14800 | 11660 |
| 6 | 0 | 48 | 5500 | 900 |

The sample data having a Y value of 1 is the target data. The sample data having a Y value of 0 is the non-target data.

The following list may be obtained by sorting the ages.

| Y value | Age |
|---|---|
| 0 | 19 |
| 1 | 25 |
| 0 | 27 |
| 1 | 28 |
| 0 | 31 |
| 0 | 48 |

Based on this, the initial value range to be divided is 19 to 48. The IV of each candidate division point may be calculated sequentially, for example, the IV of the candidate division point of 27 is calculated as follows.

| Age | Number having Y=1 | Number having Y=0 | WOE |
|---|---|---|---|
| Age <27 | 1 | 1 | ln[(1/2)/(1/4)]= 0.693 |

(continued)

| Age | Number having Y=1 | Number having Y=0 | WOE |
|---|---|---|---|
| Age >=27 | 1 | 3 | ln[(1/2)/(3/4)]= -0.41 |
| Summary | 2 | 4 | |

Then the information value corresponding to the candidate division point of 27 is as follows.

$$IV=[(1/2)-(1/4)]*0.693 + [(1/2)-(3/4)]*(-0.41)=0.27575.$$

Assuming that the maximum IV corresponds to the division point of 26, then 19 to 48 may be divided based on 26.

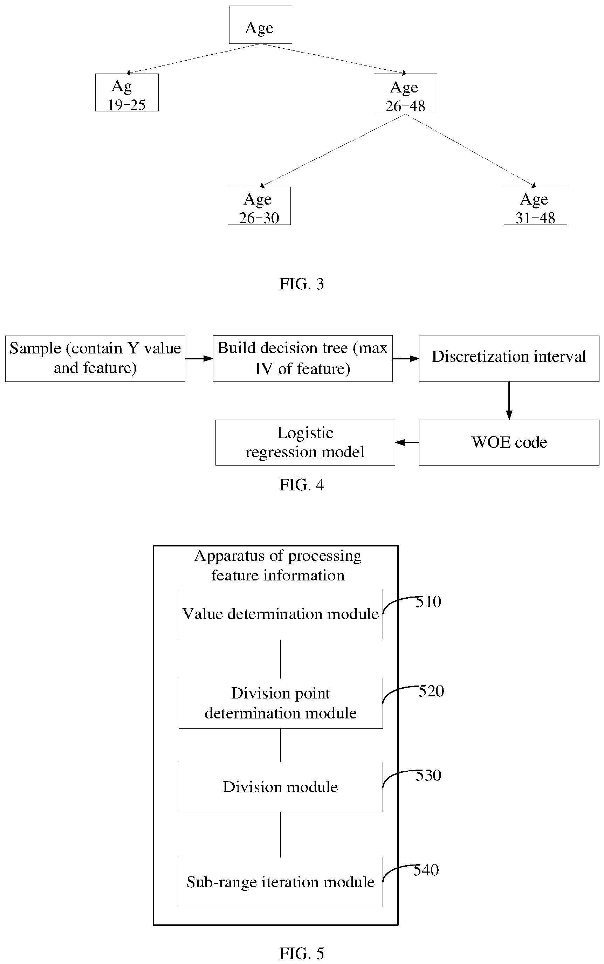

Then, on this basis, if 19 to 25 meets the termination condition, for example, if the information value obtained by dividing based on any division point in 19 to 25 is less than the information value of 19 to 25, then the division may be terminated. If 26 to 48 does not meet the termination condition, it may be used as a new value range to be divided, and it is possible to continue to search for a next target division point in the new value range to be divided. For example, if 31 is the next target division point, then the age is divided into three intervals, including 19 to 25, 26 to 30 and 31 to 48, and the corresponding tree structure is shown in FIG. 3. If the tree depth is set to 3 and a maximum depth has been reached, no division is further performed, and leaf nodes in FIG. 3 are discretization intervals.

Next, the sample WOE value corresponding to the discretization interval is used as a code to replace an original age value, so that a feature code of age is obtained, which may be input into the logistic regression model. A full flowchart is shown in FIG. 4.

In the technical solution of the present disclosure, the collection, storage, use, processing, transmission, provision, disclosure, and application of user personal information involved comply with provisions of relevant laws and regulations, take essential confidentiality measures, and do not violate public order and good custom. In the technical solution of the present disclosure, authorization or consent is obtained from the user before the user's personal information is obtained or collected.

As an implementation of the methods described above, embodiments of the present disclosure further provide an apparatus of processing a feature information. As shown in FIG. 5, the apparatus includes:

a value determination module 510 used to determine at least one candidate division point in a value range to be divided of the feature information, and determine an information value corresponding to each candidate division point in the at least one candidate division point;

a division point determination module 520 used to determine a target division point from the at least one candidate division point based on the information value;

a division module 530 used to divide the value range to be divided based on the target division point, so as to obtain two sub-ranges of the value range to be divided; and

a sub-range iteration module 540 used to determine a sub-range meeting a termination condition in the two sub-ranges as a target interval, determine a sub-range not meeting the termination condition in the two sub-ranges as a new value range to be divided, and return to perform the step of determining at least one candidate division point in a value range to be divided until both sub-ranges meet the termination condition, so as to obtain a plurality of target intervals; the plurality of target intervals are obtained to determine a discretization code of a feature information of data to be processed.

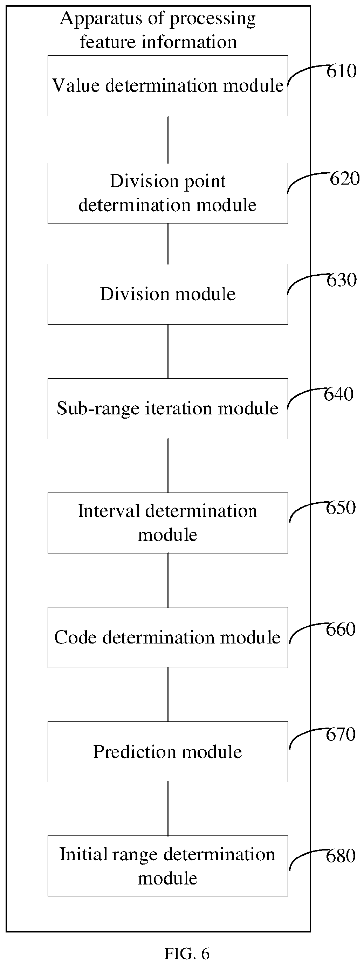

FIG. 6 shows an apparatus of processing a feature information provided by other embodiments of the present disclosure. The apparatus includes a value determination module 610, a division point determination module 620, a division module 630 and a sub-range iteration module 640, which have the same functions as the value determination module 510, the division point determination module 520, the division module 530 and the sub-range iteration module 540 in embodiments described above, which will not be repeated here.

Exemplarily, as shown in FIG. 6, the apparatus further includes:

an interval determination module 650 used to determine, from the plurality of target intervals, an interval corresponding to the feature information of the data to be processed; and

a code determination module 660 used to obtain the discretization code of the feature information of the data to be processed based on a weight of evidence of the interval corresponding to the feature information of the data to be processed.

Exemplarily, as shown in FIG. 6, the apparatus further includes:
a prediction module 670 used to process, by using a preset logistic regression model, the discretization code of the feature information of the data to be processed, so as to obtain a prediction information corresponding to the data to be processed.

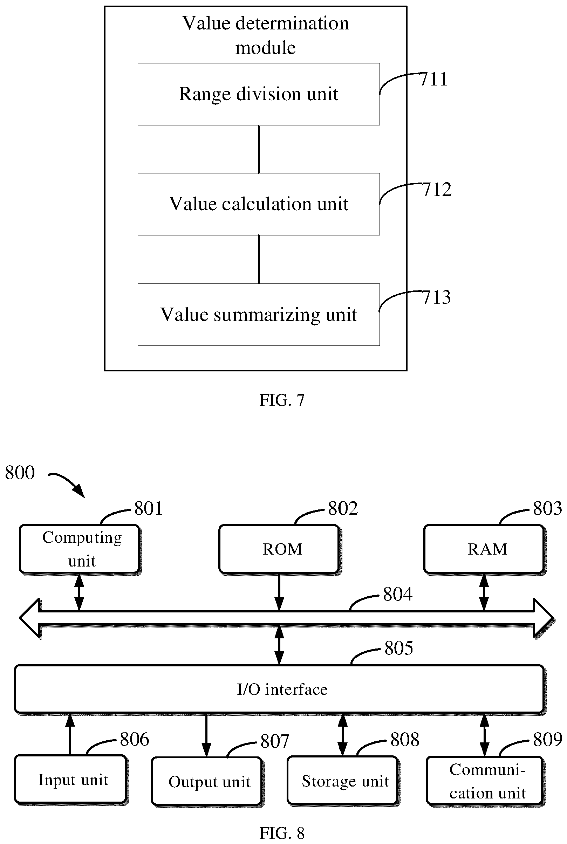

Exemplarily, as shown in FIG. 7, the value determination module 610 includes:

a range division unit 711 used to divide the value range to be divided based on an $i^{th}$ candidate division point in the at least one candidate division point, so as to obtain two candidate sub-ranges corresponding to the $i^{th}$ candidate division point, where i is an integer greater than or equal to 1;

a value calculation unit 712 used to obtain information values respectively corresponding to the two candidate sub-ranges based on the feature information of each sample data among a plurality of sample data; and

a value summarizing unit 713 used to obtain the information value corresponding to the $i^{th}$ candidate division point based on the information values respectively corresponding to the two candidate sub-ranges.

Optionally, as shown in FIG. 6, the apparatus further includes:
an initial range determination module 680 used to obtain an initial value range to be divided based on the feature information of each sample data in a plurality of sample data.

Exemplarily, the termination condition includes at least one selected from:

the sub-range is an Nth-level sub-range with respect to the initial value range to be divided, where N is an integer greater than or equal to 2;

a number of feature values contained in the sub-range is less than a predetermined number; or

the information value obtained by dividing the sub-range is less than the information value of the sub-range.

For functions of each unit, module or sub-module in each apparatus in embodiments of the present disclosure, reference may be made to the corresponding descriptions in the foregoing embodiments of methods, and details are not repeated here.

According to embodiments of the present disclosure, the present disclosure further provides an electronic device, a readable storage medium, and a computer program product.

FIG. 8 shows a schematic block diagram of an example electronic device 800 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 8, an electronic device 800 includes a computing unit 801 which may perform various appropriate actions and processes according to a computer program stored in a read only memory (ROM) 802 or a computer program loaded from a storage unit 808 into a random access memory (RAM) 803. In the RAM 803, various programs and data necessary for an operation of the electronic device 800 may also be stored. The computing unit 801, the ROM 802 and the RAM 803 are connected to each other through a bus 804. An input/output (I/O) interface 805 is also connected to the bus 804.

A plurality of components in the electronic device 800 are connected to the I/O interface 805, including: an input unit 806, such as a keyboard, or a mouse; an output unit 807, such as displays or speakers of various types; a storage unit 808, such as a disk, or an optical disc; and a communication unit 809, such as a network card, a modem, or a wireless communication transceiver. The communication unit 809 allows the electronic device 800 to exchange information/data with other devices through a computer network such as Internet and/or various telecommunication networks.

The computing unit 801 may be various general-purpose and/or dedicated processing assemblies having processing and computing capabilities. Some examples of the computing units 801 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 801 executes various methods and steps described above, such as the method of processing the feature information. For example, in some embodiments, the method of processing the feature information may be implemented as a computer software program which is tangibly embodied in a machine-readable medium, such as the storage unit 808. In some embodiments, the computer program may be partially or entirely loaded and/or installed in the electronic device 800 via the ROM 802 and/or the communication unit 809. The computer program, when loaded in the RAM 803 and executed by the computing unit 801, may execute one or more steps in the method of processing the feature information described above. Alternatively, in other embodiments, the computing unit 801 may be used to perform the method of processing the feature information by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, speech input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1.  A method of processing a feature information, comprising:

    determining (S 110) at least one candidate division point in a value range to be divided of the feature information, and determining an information value corresponding to each candidate division point in the at least one candidate division point;
    determining (S120) a target division point from the at least one candidate division point based on the information value;
    dividing (S130) the value range to be divided based on the target division point, so as to obtain two sub-ranges of the value range to be divided; and
    determining (S140) a sub-range meeting a termination condition in the two sub-ranges as a target interval, determining a sub-range not meeting the termination condition in the two sub-ranges as a new value range to be divided, and returning to perform the step of determining at least one candidate division point in a value range to be divided until both sub-ranges meet the termination condition, so as to obtain a plurality of target intervals; wherein the plurality of target intervals are obtained to determine a discretization code of a feature information of data to be processed.

2.  The method according to claim 1, further comprising:

    determining (S210), from the plurality of target intervals, an interval where the feature information of the data to be processed belongs;
    obtaining (S220) the discretization code of the feature information of the data to be processed based on a weight of evidence of the interval where the feature information of the data to be processed belongs.

3.  The method according to claim 1 or 2, further comprising:
    processing, by using a preset logistic regression model, the discretization code of the feature information of the data to be processed, so as to obtain a prediction information corresponding to the data to be processed.

4.  The method according to any one of claims 1 to 3, wherein the determining (S110) an information value corresponding to each candidate division point in the at least one candidate division point comprises:

    dividing the value range to be divided based on an $i^{th}$ candidate division point in the at least one candidate division point, so as to obtain two candidate sub-ranges corresponding to the $i^{th}$ candidate division point, where i is an integer greater than or equal to 1;
    obtaining information values respectively corresponding to the two candidate sub-ranges based on the feature information of each sample data among a plurality of sample data; and
    obtaining the information value corresponding to the $i^{th}$ candidate division point based on the information values respectively corresponding to the two candidate sub-ranges.

5.  The method according to any one of claims 1 to 4, further comprising:
    obtaining an initial value range to be divided based on the feature information of each sample data in a plurality of sample data.

6.  The method according to any one of claims 1 to 5, wherein the termination condition comprises at least one selected from:

the sub-range is an $N^{th}$-level sub-range with respect to the initial value range to be divided, where N is an integer greater than or equal to 2;

a number of feature values contained in the sub-range is less than a predetermined number; or

the information value obtained by dividing the sub-range is less than the information value of the sub-range.

7. An apparatus of processing a feature information, comprising:

a value determination module (510, 610) configured to determine at least one candidate division point in a value range to be divided of the feature information, and determine an information value corresponding to each candidate division point in the at least one candidate division point;

a division point determination module (520, 620) configured to determine a target division point from the at least one candidate division point based on the information value;

a division module (530, 630) configured to divide the value range to be divided based on the target division point, so as to obtain two sub-ranges of the value range to be divided; and

a sub-range iteration module (540, 640) configured to determine a sub-range meeting a termination condition in the two sub-ranges as a target interval, determine a sub-range not meeting the termination condition in the two sub-ranges as a new value range to be divided, and return to perform the step of determining at least one candidate division point in a value range to be divided until both sub-ranges meet the termination condition, so as to obtain a plurality of target intervals; wherein the plurality of target intervals are obtained to determine a discretization code of a feature information of data to be processed.

8. The apparatus according to claim 7, further comprising:

an interval determination module (650) configured to determine, from the plurality of target intervals, an interval where the feature information of the data to be processed belongs; and

a code determination module (660) configured to obtain the discretization code of the feature information of the data to be processed based on a weight of evidence of the interval where the feature information of the data to be processed belongs.

9. The apparatus according to claim 7 or 8, further comprising:
a prediction module (670) configured to process, by using a preset logistic regression model, the discretization code of the feature information of the data to be processed, so as to obtain a prediction information corresponding to the data to be processed.

10. The apparatus according to any one of claims 7 to 9, wherein the value determination module (510, 610) comprises:

a range division unit (711) configured to divide the value range to be divided based on an $i^{th}$ candidate division point in the at least one candidate division point, so as to obtain two candidate sub-ranges corresponding to the $i^{th}$ candidate division point, where i is an integer greater than or equal to 1;

a value calculation unit (712) configured to obtain information values respectively corresponding to the two candidate sub-ranges based on the feature information of each sample data among a plurality of sample data; and

a value summarizing unit (713) configured to obtain the information value corresponding to the $i^{th}$ candidate division point based on the information values respectively corresponding to the two candidate sub-ranges.

11. The apparatus according to any one of claims 7 to 10, further comprising:
An initial range determination module (680) configured to obtain an initial value range to be divided based on the feature information of each sample data in a plurality of sample data.

12. The apparatus according to any one of claims 7 to 11, wherein the termination condition comprises at least one selected from:

the sub-range is an $N^{th}$-level sub-range with respect to the initial value range to be divided, where N is an integer greater than or equal to 2;

a number of feature values contained in the sub-range is less than a predetermined number; or

the information value obtained by dividing the sub-range is less than the information value of the sub-range.

13. An electronic device (800), comprising:

at least one processor; and
a memory communicatively connected to the at least one processor, wherein the memory stores instructions executable by the at least one processor, and the instructions, when executed by the at least one processor, cause the at least one processor to implement the method of any one of claims 1 to 6.

14. A non-transitory computer-readable storage medium having computer instructions therein, wherein the computer instructions are configured to cause a computer to implement the method of any one of claims 1 to 6.

15. A computer program product containing a computer program, wherein the computer program, when executed by a processor, causes the processor to implement the method of any one of claims 1 to 6.

S110

At least one candidate division point is determined in a value range to be divided of the feature information, and an information value corresponding to each candidate division point in the at least one candidate division point is determined

S120

A target division point is determined from the at least one candidate division point based on the information value

S130

The value range to be divided is divided based on the target division point, so as to obtain two sub-ranges of the value range to be divided

S140

A sub-range meeting a termination condition in the two sub-ranges is determined as a target interval, a sub-range not meeting the termination condition in the two sub-ranges is determined as a new value range to be divided, and the process returns to the step of determining at least one candidate division point in a value range to be divided until both sub-ranges meet the termination condition, so as to obtain a plurality of target intervals

FIG. 1

S210

An interval where the feature information of the data to be processed belongs is determined from the plurality of target intervals

S220

The discretization code of the feature information of the data to be processed is obtained based on a weight of evidence of the interval where the feature information of the data to be processed belongs

FIG. 2

Age

Ag
19-25

Age
26-48

Age
26-30

Age
31-48

FIG. 3

Sample (contain Y value and feature) → Build decision tree (max IV of feature) → Discretization interval

Logistic regression model ← WOE code ← Discretization interval

FIG. 4

Apparatus of processing feature information

Value determination module — 510

Division point determination module — 520

Division module — 530

Sub-range iteration module — 540

FIG. 5

Apparatus of processing
feature information

Value determination module — 610

Division point
determination module — 620

Division module — 630

Sub-range iteration module — 640

Interval determination
module — 650

Code determination module — 660

Prediction module — 670

Initial range determination
module — 680

FIG. 6

Value determination module

Range division unit — 711

Value calculation unit — 712

Value summarizing unit — 713

FIG. 7

800

Computing unit — 801

ROM — 802

RAM — 803

804

I/O interface — 805

Input unit — 806

Output unit — 807

Storage unit — 808

Communication unit — 809

FIG. 8

Europäisches Patentamt
European Patent Office
Office européen des brevets

# EUROPEAN SEARCH REPORT

**Application Number**

EP 22 21 6989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/248356 A1 (TONGDUN HOLDING CO LTD [CN]) 17 December 2020 (2020-12-17) * paragraphs [0003], [0007], [0009] – [0020] * | 1-15 | INV. G06F16/24 G06F17/18 |

TECHNICAL FIELDS SEARCHED (IPC)

G06F

The present search report has been drawn up for all claims

| Place of search | Date of completion of the search | Examiner |
|---|---|---|
| The Hague | 9 January 2023 | Hackelbusch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6989

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2023

| Patent document cited in search report | | Publication date | Patent family member(s) | | Publication date |
|---|---|---|---|---|---|
| WO 2020248356 | A1 | 17-12-2020 | CN | 110245140 A | 17-09-2019 |
| | | | WO | 2020248356 A1 | 17-12-2020 |

EPO FORM P0459

For more details about this annex : see Official Journal of the European Patent Office, No. 12/82